Europäisches Patentamt

European Patent Office

Office européen des brevets

(19)

(11) Numéro de publication : **0 239 510 B1**

(12) **FASCICULE DE BREVET EUROPÉEN**

(45) Date de publication du fascicule du brevet :
26.04.89

(21) Numéro de dépôt : 87420066.0

(22) Date de dépôt : 10.03.87

(51) Int. Cl.⁴ : **F 16 L   1/02, H 02 G   9/02**

(54) Dispositif pour la signalisation de canalisations enterrées.

(30) Priorité : 19.03.86 FR 8604304

(43) Date de publication de la demande :
30.09.87 Bulletin 87/40

(45) Mention de la délivrance du brevet :
26.04.89 Bulletin 89/17

(84) Etats contractants désignés :
AT BE CH DE ES GB GR IT LI LU NL

(56) Documents cités :
EP–A– 0 140 797
DE–A– 2 428 740
US–A– 3 282 057

(73) Titulaire : PLYMOUTH FRANCAISE
21 allée du Rhône
F-69320 Feyzin (FR)

(72) Inventeur : de Courville, Arnaud
32 cours de la Liberté
F-69003 Lyon (FR)

(74) Mandataire : Maureau, Pierre et al
Cabinet GERMAIN & MAUREAU B.P. 3011
F-69392 Lyon Cédex 03 (FR)

EP 0 239 510 B1

## Description

Pour faciliter, lors de fouilles, la signalisation et le repérage des canalisations enterrées, il est habituel d'enterrer, au-dessus des canalisations, des dispositifs de signalisation se présentant le plus souvent sous la forme de grillages réalisés en matière plastique.

Il est en outre connu d'associer à ces grillages des éléments en forme de bandes longitudinales continues et rectilignes qui ont des résistances a l'allongement et à la rupture différentes de celles du grillage. Cette association, qui est destinée à faciliter la signalisation lorsque les fouilles sont faites à la pelle mécanique, ne permet pas toujours en fait d'atteindre ce but. L'expérience prouve en effet que souvent, lors de la rupture du grillage et des bandes par le godet de la pelle, les morceaux de bande arrachés par le godet disparaissent dans les matériaux saisis et les bandes restant sur les parois de la fouille peuvent être peu visibles.

Si tel est le cas, le dispositif de signalisation ne joue plus qu'imparfaitement son rôle, et le conducteur de la pelle peut ne pas voir le dispositif de signalisation, et ainsi ne pas être alerté de la présence d'une canalisation sous-jacente.

Il en est d'ailleurs de même lorsque la fouille est faite dans un terrain meuble qui, en s'éboulant de lui-même, masque les deux extrémités de chaque bande, en les dissimulant à la vue du conducteur.

Il arrive enfin que le godet de la pelle découpe de façon très nette les bandes associées au grillage ; le conducteur ne voit alors les bandes ni dans les parois de la fouille, ni dans la masse de matériaux contenue dans la pelle. Malgré leur intérêt, les bandes longitudinales associées au grillage ne permettent donc pas de garantir, systématiquement, lors des fouilles, notamment lors des fouilles réalisées à la pelle mécanique, une signalisation certaine des canalisations placées sous le grillage.

Il est en outre à remarquer que la fabrication de tels grillages nécessite l'utilisation de deux types de matériaux différents, ce qui implique des problèmes de stockage.

Le document US-A-3 282 057 concerne un dispositif de signalisation d'éléments enterrés, se présentant sous la forme d'une bande continue comportant des figures de prédécoupe s'étendant sur toute sa largeur. L'efficacité d'un tel dispositif est médiocre pour les raisons indiquées précédemment.

L'invention vise à proposer un dispositif qui permet une signalisation efficace des canalisations enterrées, tout en étant constitué que par une seule matière.

Ce dispositif, du type comportant un ruban longitudinal pourvu de lignes de découpage et/ou de prédécoupage s'étendant transversalement, est caractérisé en ce que le ruban consiste en au moins deux bandes longitudinales délimitées par au moins une ligne longitudinale de moindre résistance, les lignes de découpage et/ou de prédécoupage s'étendant transversalement sur au moins l'une de ces bandes longitudinales.

Un seul et même matériau étant utilisé pour la réalisation de ce dispositif, ce sont les lignes longitudinales de moindre résistance (réalisées par rainage, prédécoupage, perforations ou autres moyens) et les lignes transversales de découpage qui sont mises à profit pour faciliter le repérage d'une canalisation sous-jacente, en cas de rupture du dispositif par un godet ou autre outil d'un engin de terrassement. Si, en effet, le dispositif est saisi par l'outil, la traction exercée sur lui provoque successivement son allongement et sa rupture ; mais cette rupture se produit seulement dans la ou dans les zones ou bandes longitudinales continues du ruban, car la traction de l'outil sur ce ruban provoque la séparation de la ou des autres bandes qui sont non pas continues, mais discontinues. Il en résulte que des morceaux de bandes se trouvent alors séparés. Ce sont précisément ces morceaux de bandes qui constituent des éléments de signalisation apparaissant très visiblement hors des parois d'une tranchée, hors d'un talus d'éboulement ou hors du godet d'une pelle.

Le ruban constituant ce dispositif de signalisation peut être réalisé en tout matériau suffisamment souple pour permettre facilement sa mise en place dans le sol et avantageusement sa présentation en rouleau. Il peut s'agir notamment d'un ruban extrudé en résine synthétique, par exemple : polypropylène, polyéthylène, chlorure de polyvinyle... Cet aménagement nécessite l'utilisation d'une part d'un appareil (molettes ou autres) engendrant des lignes longitudinales de rainage, de perforations et/ou de prédécoupe dans le ruban, et d'autre part, de couteaux, matrices ou autres systèmes effectuant des découpes transversales situées à intervalles réguliers dans les zones longitudinales devant être discontinues dans le ruban. Ces appareils peuvent être animés de diverses façons suivant des cinématiques continues ou alternatives liées au déplacement du produit.

Diverses présentations sont possibles pour ce dispositif de signalisation.

Suivant une forme d'exécution, le ruban est divisé par deux lignes longitudinales parallèles de moindre résistance en trois bandes longitudinales, à savoir une bande centrale continue et deux bandes latérales rendues discontinues par des lignes de découpage ou de prédécoupage s'étendant transversalement sur toute leur largeur.

Suivant une autre forme d'exécution, le ruban est divisé par plusieurs lignes longitudinales parallèles de moindre résistance en un nombre impair de bandes longitudinales, dont les deux extérieures sont continues et sont adjacentes à des bandes longitudinales discontinues qui se raccordent par une bande longitudinale continue ou par une alternance de bandes longitudinales continues et discontinues.

La largeur du dispositif de signalisation est bien entendu fonction du diamètre de la ou des canalisations sous-jacentes. S'il s'agit de signaler des canalisations ou des câbles souples ou même rigides de faible diamètre et posés dans le sol au moyen d'appareils habituellement dénommés « charrues-taupes, le dispositif de signalisation consiste en un ruban dont la largeur totale est de l'ordre de 5 centimètres et dont la pose est réalisée par la charrue-taupe » en même temps que celle de la canalisation.

L'invention sera bien comprise d'ailleurs, et ses avantages ainsi que d'autres caractéristiques ressortiront de la description qui suit, en référence au dessin schématique annexe représentant, a titre d'exemples non limitatifs, deux formes d'exécution de ce dispositif pour la signalisation de canalisations enterrées.

Figure 1 est une vue en plan par dessus d'un morceau du dispositif, dans une première forme d'exécution ;

Figure 2 en est, à plus grande échelle, une vue en coupe transversale suivant II-II de figure 1 ;

Figure 3 est une vue de côté illustrant la pose de ce dispositif de signalisation simultanément à celle de la canalisation sous-jacente, au moyen d'une « charrue-taupe » ;

Figure 4 est une vue en perspective d'une tranchée laissant apparaître le matériau de signalisation ;

Figure 5 est une vue en perspective d'un godet de pelle mécanique contenant des matériaux provenant d'une tranchée et laissant apparaître le matériau de signalisation.

Figure 6 est une vue en plan par dessus d'un morceau de dispositif de signalisation, dans le cas d'une deuxième forme d'exécution.

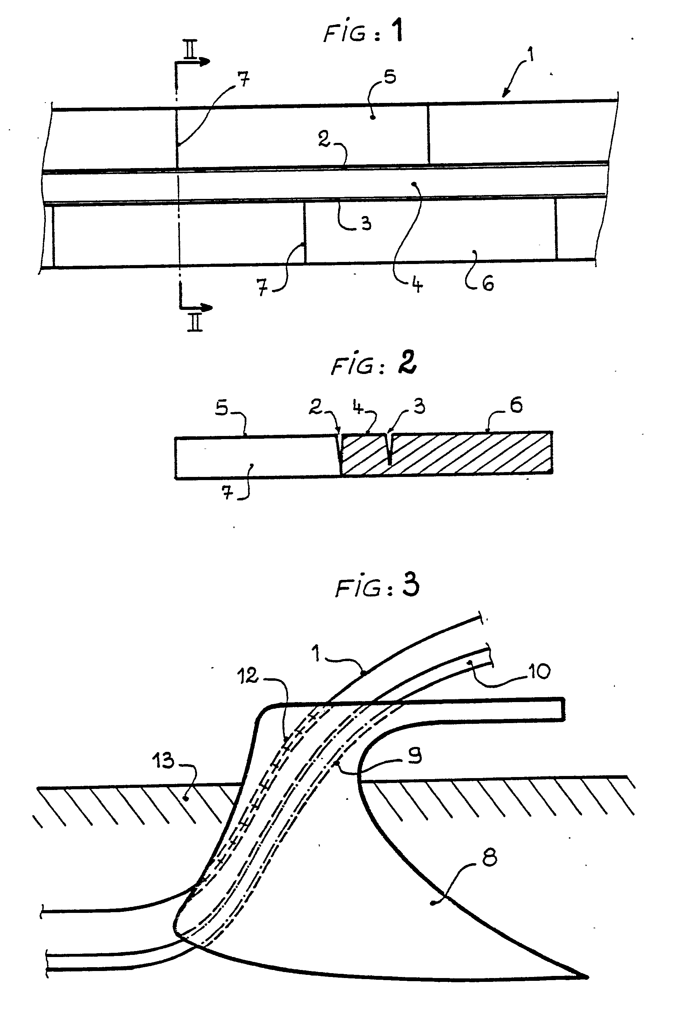

Le dispositif de signalisation représenté à la figure 1 consiste en un ruban réalisé par extrusion en une résine synthétique, par exemple en polypropylène. Dans le cas représenté, la largeur de ce ruban est de l'ordre de 50 millimètres.

Ce ruban qui est designé de façon générale par 1 présente deux lignes longitudinales de moindre résistance respectivement 2 et 3 qui sont disposées longitudinalement et ont un écartement d'environ 10 millimètres. Ces deux lignes de moindre résistance peuvent être des lignes de rainage ou peuvent être formées par une succession de perforations ou de prédécoupes. Quel que soit leur agencement, ces lignes de moindre résistance sont réalisées en continu lors de la fabrication du ruban.

Ces deux lignes 2 et 3 délimitent, dans le ruban 1, une bande longitudinale centrale 4 de part et d'autre de laquelle se trouvent deux bandes latérales 5 et 6. Dans chacune de ces deux bandes 5 et 6 sont aménagées des découpes rectilignes transversales 7 qui sont situées à intervalles réguliers et s'étendent sur route la largeur de la bande concernée, c'est-à-dire depuis la bande centrale 4 jusqu'au bord libre de la bande latérale 5, 6.

Un tel ruban constitue avantageusement un dispositif permettant la signalisation efficace de canalisations enterrées de petit diamètre. Dans ce cas particulier, le dispositif de signalisation peut d'ailleurs être posé dans le sol en même temps que la canalisation elle-même. Ce résultat peut être obtenu en faisant usage d'un appareil de type connu habituellement dénommé « charrue-taupe ». La figure 3 représente le soc 8 d'une telle charrue. Dans ce soc sont prévus non seulement le conduit 9 permettant le passage de la canalisation à enterrer 10, mais aussi un conduit 12 situé au-dessus et en arrière de celui 9 : ce conduit 12 laisse passage au ruban de signalisation 1.

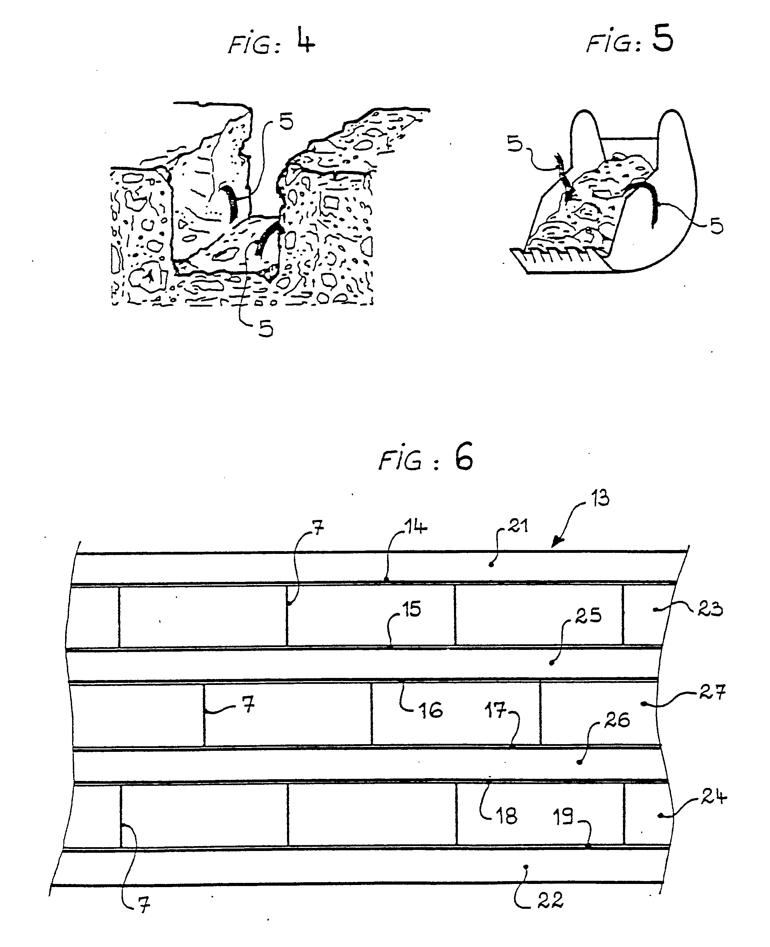

Dans l'hypothèse où une tranchée doit être réalisée dans le sol 11 (figure 3) où a été enterrée la canalisation 10, le dispositif de signalisation 1 intervient de façon très efficace lorsqu'il est heurté par le godet de la pelle effectuant la tranchée. Après avoir en effet été accroché par le godet, le ruban 1 s'allonge jusqu'à rupture. Cette rupture affecte la bande centrale 4 du ruban 1, mais entraîne simultanément la séparation de cette bande 4 par rapport aux deux bandes latérales 5 et 6. En raison de leur discontinuité, au moins l'une ou l'autre de ces deux bandes apparaîtront alors visiblement soir dans la tranchée, comme le montre la figure 4, soir à l'extérieur du godet de la pelle, comme le montre la figure 5.

S'il s'agit de signaler des canalisations de plus grand diamètre ou de signaler plusieurs canalisations enterrées les unes à côté des autres dans le sol, il est avantageux de recourir à un dispositif de signalisation de plus grande largeur, tel que par exemple celui représenté à la figure 6.

Ce dispositif consiste en un ruban qui, désigné de façon générale par 13, est divisé par des lignes de moindre résistance respectivement 14, 15, 16, 17, 18 et 19. Les deux lignes 14 et 19 délimitent, avec les deux bords longitudinaux du ruban 13, deux bandes latérales continues respectivement 21 et 22. Les bandes 14 et 15 d'une part, et 18 et 19 d'autre part délimitent, de leur côté, deux bandes respectivement 23 et 24 qui sont discontinues car elles présentent des découpes transversales 7 régulièrement espacées. Les deux bandes 15, 16 d'une part, et 17, 18 d'autre part délimitent. elles aussi, deux bandes longitudinales respectivement 25 et 26 qui sont continues. Les deux bandes 16 et 17 enfin délimitent une bande centrale 27 qui est rendue discontinue par des découpes transversales 7 régulièrement espacées.

Le dispositif de signalisation ainsi constitué comporte donc une alternance de bandes continues 21, 22, 25, 26 et de bandes discontinues 23, 24, 27.

Pour la signalisation de canalisations enterrées, le comportement de ce dispositif 13 est identique à celui du dispositif 1 décrit plus haut en référence aux figures 1 à 5.

Comme il va de soi, l'invention ne se limite pas aux seules formes d'exécutions de ce dispositif de signalisation qui ont été ci-dessus indiquées à titre d'exemples ; elle en embrasse, au contraire, toutes les variantes, quels que soient notamment la matière constitutive du ruban et les moyens adoptés pour tracer des lignes de moindre résistance et des lignes de découpe dans le ruban.

## Revendications

1. Dispositif pour la signalisation de canalisations enterrées, du type comportant un ruban (1, 13) longitudinal pourvu de lignes de découpage et/ou de prédécoupage s'étendant transversalement, caractérisé en ce que le ruban consiste en au moins deux bandes longitudinales (4, 5) délimitées par au moins une ligne longitudinale de moindre résistance (2), les lignes de découpage et/ou de prédécoupage s'étendant transversalement sur au moins l'une de ces bandes longitudinales.

2. Dispositif pour la signalisation de canalisations enterrées selon la revendication 1, caractérisé en ce que le ruban (1) est divisé par deux lignes longitudinales parallèles de moindre résistance (2, 3) en trois bandes longitudinales, à savoir une bande centrale continue (4) et deux bandes latérales (5, 6) rendues discontinues par des lignes de découpage ou de prédécoupage (7) s'étendant transversalement sur toute leur largeur.

3. Dispositif pour la signalisation de canalisations enterrées selon la revendication 1, caractérisé en ce que le ruban (13) est divisé par plusieurs lignes longitudinales parallèles de moindre résistance (14...19) en un nombre impair de bandes longitudinales (21...27), dont les deux extérieures (21, 22) sont continues et sont adjacentes à des bandes longitudinales discontinues (23, 24) qui se raccordent par une bande longitudinale continue ou par une alternance de bandes longitudinales continues et discontinues.

## Claims

1. A device to indicate the presence of buried pipe lines of the type comprising a longitudinal ribbon (1, 13) provided with division and/or partial division lines extending transversely, characterised in that the ribbon consists of at least two longitudinal strips (4, 5) demarcated by at least one longitudinal line (2) of lower strength, the division and/or partial division lines extending transversely across at least one of these longitudinal strips.

2. A device to indicate the presence of buried pipe lines according to Claim 1, characterised in that the ribon (1) is divided by two parallel lines of lower strength (2, 3) into three longitudinal strips, namely a central continuous strip (4), and two side strips (5, 6) made discontinuous by division or partial division lines (7) extending transversely across the whole of their width.

3. A device to indicate the presence of buried pipe lines according to Claim 1, characterised in that the ribbon (13) is divided by several parallel longitudinal lines (14...19) of lower strength into an odd number of longitudinal strips (21...27), the two outermost strips (21, 22) of which are continuous and adjacent to discontinuous longitudinal strips (23, 24) which are linked together by a continuous longitudinal strip or by an alternation of continuous and discontinuous longitudinal strips).

## Patentansprüche

1. Vorrichtung zum Kenntlichmachen von unterirdischen Leitungen mit einem longitudinalen Trassenband (1, 13) mit querlaufenden Schnitt- und/oder Vorschnittlinien, dadurch gekennzeichnet, daß das Trassenband aus wenigstens zwei Längsstreifen (4, 5) besteht, die durch wenigstens eine Längslinie (2) verringerter Widerstandsfähigkeit gegeneinander abgegrenzt sind, und daß die Schnitt- und/oder Vorschnittlinien in Querrichtung auf wenigstens einem dieser Streifen verlaufen.

2. Vorrichtung zum Kenntlichmachen von unterirdischen Leitungen nach Anspruch 1, dadurch gekennzeichnet, daß das Trassenband (1) durch zwei parallele Längslinien (2, 3) verringerter Widerstandsfähigkeit in drei Längsstreifen aufgeteilt ist, nämlich einen durchgehenden zentralen Streifen (4) und zwei seitliche Streifen (5, 6), die durch sich quer ihre gesamte Breite erstreckende Schnitt- und/oder Vorschnittlinien (7) unterbrochen sind.

3. Vorrichtung zum Kenntlichmachen von unterirdischen Leitungen nach Anspruch 1, dadurch gekennzeichnet, daß das Trassenband (13) durch mehrere parallele Längslinien (14...19) verringerter Widerstandsfähigkeit in eine ungerade Anzahl von Längsstreifen (22...27) unterteilt ist, daß die beiden äußeren (21, 22) dieser Längsstreifen durchgehend ausgebildet sind und an unterbrochene Längsstreifen (23, 24) angrenzen, die durch einen fortlaufenden Längsstreifen oder durch eine wechselnde Folge von fortlaufenden und unterbrochenen Längsstreifen miteinander verbunden sind.

FIG : 1

FIG : 2

FIG : 3

FIG: 4

FIG: 5

FIG: 6